(19) Europäisches Patentamt
European Patent Office
Office européen des brevets

(11) **EP 1 968 325 A2**

(12) **EUROPEAN PATENT APPLICATION**

(43) Date of publication:
**10.09.2008 Bulletin 2008/37**

(51) Int Cl.:
*H04N 7/26* (2006.01)          *H04N 7/46* (2006.01)
*H04N 7/50* (2006.01)

(21) Application number: **08101604.0**

(22) Date of filing: **13.02.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **28.02.2007 GB 0703889**

(71) Applicant: **Tandberg Television ASA**
**0661 Oslo (NO)**

(72) Inventors:
 • **Bock, Alois Martin**
  **Eastleigh, Hampshire SO53 4RH (GB)**
 • **Duxbury, Christopher**
  **Eastleigh, Hampshire SO53 2EG (GB)**

(74) Representative: **Want, Clifford James**
 **Harrison Goddard Foote**
 **40- 43 Chancery Lane**
 **London**
 **WC2A 1JA (GB)**

(54) **Compression of video signals containing fades and flashes**

(57)    A method and encoder for compressing a video signal inserts at least one non-referenced frame to coincide with a duration of a flash on detecting the flash in the video signal. On detecting a fade in the video signal, an order in which frames are coded is changed such that referenced frames are positioned immediately before and after the fade and a pyramidal structure of bidirectionally coded frames are used for the duration of the fade.

Figure 3

EP 1 968 325 A2

**Description**

This invention relates to compression of video signals containing fades and flashes.

Motion-compensated predictive video compression exploits a similarity of successive pictures by making predictions from previously coded pictures. The pictures from which the predictions are taken can come from the past (forward prediction) or the future (backward prediction) or a combination of the two (bidirectional prediction) thus enabling the prediction of uncovered areas. Therefore, state-of-the-art video compression engines can cope with most types of motion and critical picture material.

However, there are two types of effects which can cause severe picture degradation and are worthy of special mitigating treatment: video sequences that include fades and video sequences that contain short, bright flashes such as those that occur when a still camera with a flash apparatus is used in the field of view. During fades a motion estimator often produces random motion vectors due to video luminosity changes. Similarly, predictions taken from pictures with flashes such as camera flashes are poor indications of video behaviour and lead to poor compression performance.

It is an object of the present invention at least to ameliorate the aforesaid shortcomings in the prior art.

According to a first aspect of the present invention there is provided a method of compressing a video signal comprising: on detecting a flash in the video signal, inserting at least one non-referenced frame to coincide with a duration of the flash; and on detecting a fade in the video signal, changing an order in which frames are coded such that referenced frames are positioned immediately before and after the fade and a pyramidal structure of bidirectionally coded frames are used for the duration of the fade.

Preferably, quantisation is increased in a frame in which a flash is detected.

Preferably, on detection of a fade a search range of a motion estimator is reduced for the duration of the fade.

Advantageously, detecting a flash in the video signal comprises the steps of: calculating a first average luminance of fields of at least one frame immediately preceding a frame of interest and a second average luminance of fields of at least one frame immediately succeeding the frame of interest; calculating whether the luminance of a top field of the frame of interest exceeds the greater of the first average luminance and the second average luminance by a first predetermined threshold and if so signalling that a flash occurred in the top field of the frame of interest; and calculating whether the luminance of a bottom field of the frame of interest exceeds the greater of the first average luminance and the second average luminance by the first predetermined threshold and if so signalling that a flash occurred in the bottom field of the frame of interest.

Conveniently, detecting a flash in the video signal comprises the steps of: calculating a first average luminance of the fields of the current frame; calculating a second average luminance of the fields of a frame preceding the current frame by two frames; calculating whether the luminance of a bottom field of the frame preceding the current frame exceeds a greater of the first average luminance and the second average luminance by a first predetermined threshold and if so signalling that a flash occurred in the bottom field of the previous frame; and calculating whether the luminance of a top field of the frame preceding the current frame exceeds a greater of the first average luminance and the second average luminance by a first predetermined threshold and if so signalling that a flash occurred in the top field of the previous frame.

Advantageously, detecting a fade in the video signal comprises the steps of: calculating an average luminance for each of a first plurality of successive fields; calculating successive differences in the average luminance between each of the first plurality of successive fields; calculating a sum of the successive differences; calculating an average of a second plurality of the sum and such sums of differences of immediately preceding fields; calculating an absolute difference between the sums and their average; and signalling that a fade is detected if the average is greater than a second predetermined threshold and if each of the absolute differences is less than a third predetermined threshold.

Conveniently, detecting a fade in the video signal comprises the steps of: calculating an average luminance for each of four successive fields; calculating successive differences in the average luminance between each of the four fields; calculating a sum of the successive differences; calculating an average of the sum and two such sums for successive differences of immediately preceding sets of fields; calculating an absolute difference between the three sums and their average; and signalling that a fade is detected if the average is greater than a second predetermined threshold and if each of the absolute differences is less than a third predetermined threshold.

According to a second aspect of the invention, there is provided an encoder for a video signal comprising: compensating delay means, fade detector means and flash detector means arranged such that a video signal may be input in parallel to the compensating delay means, the fade detector means and the flash detector means; frame re-ordering means having an input connected to an output of the compensating delay means; coding mode means having inputs from the fade detector means and the flash detector means to output a control signal to the frame re-ordering means; compression coding loop means having inputs from the frame re-ordering means and the coding mode means; motion estimator means having inputs from the frame re-ordering means and the coding mode means to output a motion vector to the compression coding loop means and to input a reconstructed video signal from the compression coding loop means; and entropy coding means to receive an input from the compression coding loop and to output a compressed video signal; wherein the frame re-ordering means is arranged such that: on detection of a flash in the video signal by the flash detector means, at least one non-referenced frame is inserted to coincide with a duration of the flash; and on detection of a fade in the video signal by the fade detector means, an order in which frames are coded is changed such that referenced frames are positioned immediately before and after the fade and a pyramidal structure of bidirectionally coded frames are used for the duration of the fade.

Advantageously, the fade detector means is arranged to: calculate an average luminance for each of a first plurality of successive fields; calculate successive differences in the average luminance between each of the first plurality of fields; calculate a sum of the successive differences; calculate an average of a second plurality of the sum and such sums of differences of immediately preceding fields; calculate an absolute difference between the sums and their average; and signal that a fade is detected if the average is greater than a second predetermined threshold and if each of the absolute differences is less than a third predetermined threshold.

Conveniently, the fade detector means is arranged to: calculate an average luminance for each of four successive fields; calculate successive differences in the average luminance between each of the four fields; calculate a sum of the successive differences; calculate an average of the last three sums; calculate an absolute difference between the three sums and their average; and signal that a fade is detected if the average is greater than a second predetermined threshold and if each of the absolute differences is less than a third predetermined threshold.

Advantageously, the flash detector means is arranged to: calculate a first average luminance of fields of at least one frame immediately preceding a frame of interest and a second average luminance of fields of at least one frame immediately succeeding the frame of interest; calculate whether the luminance of a top field of the frame of interest exceeds the greater of the first average luminance and the second average luminance by a first predetermined threshold and if so to signal that a flash occurred in the top field of the frame of interest; and calculate whether the luminance of a bottom field of the frame of interest exceeds the greater of the first average luminance and the second average luminance by the first predetermined threshold and if so to signal that a flash occurred in the bottom field of the frame of interest.

Conveniently, the flash detector means is arranged to: calculate an average luminance of each field for five field periods; calculate a first average luminance of fields of a frame immediately preceding a frame of interest and a second average luminance of fields of a frame immediately succeeding the frame of interest; calculate whether the luminance of a top field of the frame of interest exceeds the greater of the first average luminance and the second average luminance by a first predetermined threshold and if so to signal that a flash occurred in the top field of the frame of interest; and calculate whether the luminance of a bottom field of the frame of interest exceeds the greater of the first average luminance and the second average luminance by the first predetermined threshold and if so to signal that a flash occurred in the bottom field of the frame of interest.

Preferably, the compression coding loop is arranged to increase quantisation in a frame in which a flash is detected.

Preferably, the motion estimation means is arranged to reduce a search range on detection of a fade.

According to a third aspect of the invention, there is provided a computer program product comprising program code means arranged to perform all the steps of the method described above when that program code means is run on a computer.

According to a fourth aspect of the invention, there is provided a computer-readable medium embodying a computer program product as described above.

The invention will now be described, by way of example, with reference to the accompanying drawings in which:

Figure 1 illustrates a coding structure with referenced B pictures and non-referenced B pictures;

Figure 2 illustrates pyramid B picture coding;

Figure 3 is a block diagram of an encoder according to the invention with fade and flash detectors;

Figure 4 is a coding structure for a video sequence containing a camera flash;

Figure 5 is a flowchart of a method according to the invention of detecting a flash or fade in a video signal and adapting encoding of the video signal accordingly;

Figure 6 is a flowchart of the step of detecting a fade of the method of Figure 5;

Figure 7 is an illustration of the step of detecting a fade of the method of Figure 5

Figure 8 is a flowchart of the step of detecting a flash of the method of Figure 5;

Figure 9 is an example of coding structure used on fade-to-black; and

Figure 10 is an illustration of the step of detecting a flash of the method of Figure 5.

In the Figures like reference numerals denote like parts.

This disclosure describes methods for detection of video fades and flashes such as camera flashes and mechanisms to improve compression performance under those conditions. The detection is carried out ahead of an actual coding process. Once a video fade or camera flash has been detected, the encoding process can be controlled to provide improved coding with these effects.

**H.264 coding structures**

Compression improvements of video signals with fades or flashes are described herein on a basis of the H.264 compression standard. For the purpose of this explanation four types of picture can be distinguished in H.264:

- Intra-coded pictures (I) coded independently of any other pictures;

- Forward predicted pictures (P) which take predictions from previous I or P pictures;

- Non-referenced bi-directionally predicted pictures ($B_{nr}$) which take predictions from past and future I or P pictures but in which no predictions are taken from $B_{nr}$ pictures;

- Referenced bi-directionally predicted pictures ($B_r$) which also take predictions from past and future I or P pictures, but in which predictions are also taken from $B_r$ pictures.

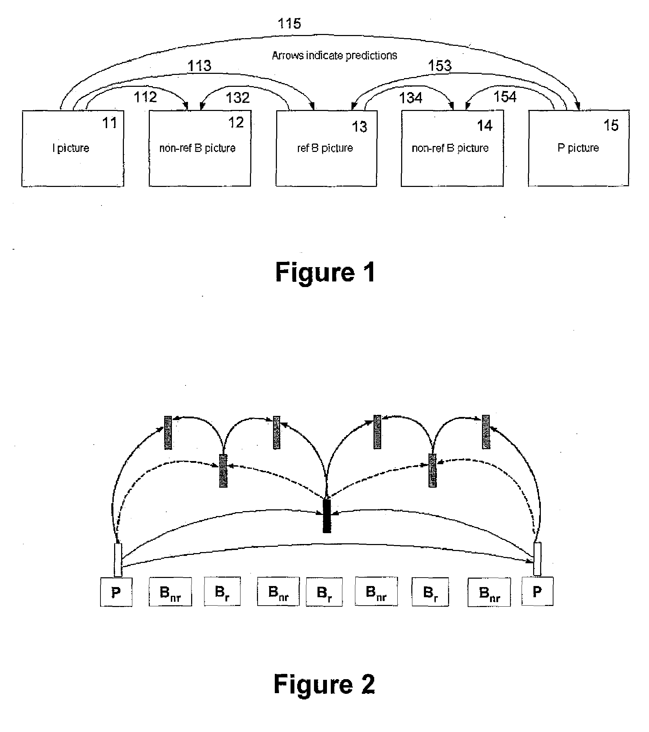

The combination of $B_{nr}$ and $B_r$ pictures makes it possible to generate a pyramid B coding structure such as shown in Figure 1, in which an I picture 11 is independently coded. A non-referenced B picture 12 is predicted by a prediction 112 from the preceding I picture 11 and by a prediction 132 from a succeeding referenced B picture 13. Referenced B picture 13 is predicted by a prediction 113 from the preceding I picture 11 and by a prediction 153 from a succeeding P picture 15. Non-referenced B picture 14 is predicted by prediction 134 from preceding referenced B picture 13 and by prediction 154 from succeeding P picture 15. P picture 15 is predicted by prediction 115 from preceding I picture 11.

Such coding structures are generally more efficient than structures without referenced B pictures, such as MPEG 2. However, if extended to more layers of hierarchical coding such as shown in Figure 2, pyramid B picture coding can be used to improve the coding performance during video fades, provided that the pyramid covers a complete fade duration.

The coding performance of flashes can be improved by ensuring that corresponding pictures are coded as $B_{nr}$ pictures, that is, pictures that are not involved in the coding of neighbouring pictures.

In H.264, video frames can be coded as one or two pictures, i.e. one picture for the entire frame or two pictures, one for each of two interlaced fields. Since picture coding mode decisions are usually made for an entire frame, reference will be made hereinafter to I, P, $B_r$ or $B_{nr}$ frames rather than pictures.

**Fade detection**

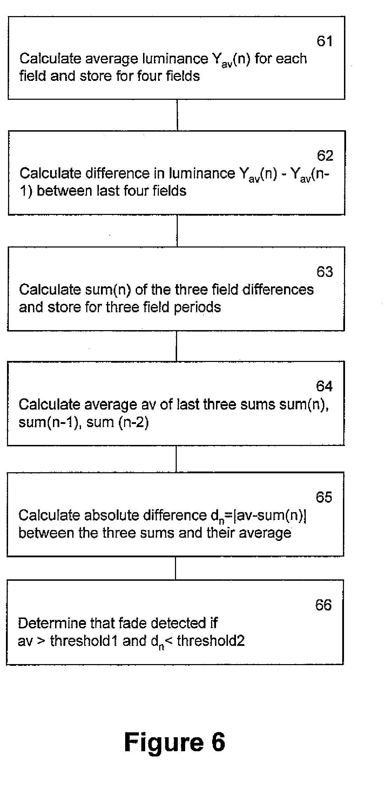

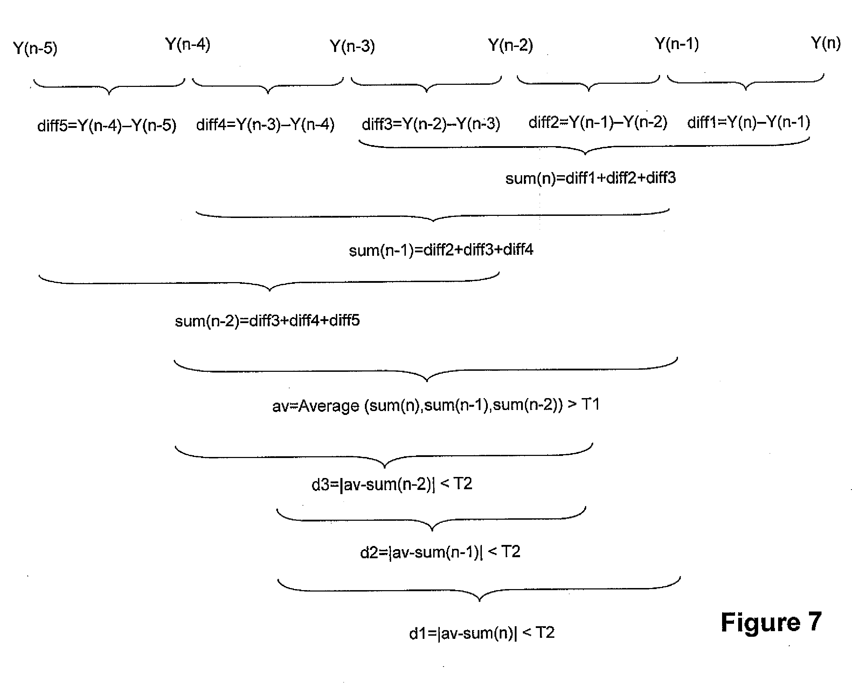

Three types of fades can be distinguished: fade to black, fade from black and cross-fades from one video signal to another. In the former two cases and, to some extent, in the latter case, a fade can be detected by measuring an average luminosity of a video signal over a number of fields. Referring to Figures 6 and 7, an example fade detector algorithm based on luminance gradient detection can be summarised as follows:

1. Calculate, step 61, an average luminance value for each field, $Y_{av}(n)$ and store for four field periods;
2. Calculate, step 62, a difference in average luminance between the last four fields to determine changes in luminance between neighbouring fields, although it will be understood that different numbers of fields could be used in different embodiments of the invention

$$\text{diff1} = Y_{av}(n)\text{-}Y_{av}(n\text{-}1)$$

$$\text{diff2} = Y_{av}(n\text{-}1)\text{-}Y_{av}(n\text{-}2)$$

$$\text{diff3} = Y_{av}(n\text{-}2)\text{-}Y_{av}(n\text{-}3);$$

3. Calculate, step 63, a sum of the three field differences and store for three field periods, to provide a measure of the variation in luminance over a series of successive fields, although it will be understood that fewer or more differences could be summed in different embodiments of the invention

$$\text{sum}(n) = \text{diff1}+\text{diff2}+\text{diff3};$$

4. Calculate, step 64, an average over the last three sums, to detect any trend in the luminance, although it will be understood that fewer or more sums could be averaged in different embodiments of the invention

$$\text{av} = (\text{sum}(n)+\text{sum}(n\text{-}1)+\text{sum}(n\text{-}2))/3;$$

5. Calculate, step 65, an absolute difference between the three sums and their average, to isolate any large variations from the average luminance indicative of a change in luminance other than a smooth transition

$$d1 = |av\text{-}sum(n)|$$

$$d2 = |av\text{-}sum(n\text{-}1)|$$

$$d3 = |av\text{-}sum(n\text{-}2)|;$$

and

6. Determine, step 66, whether (av > threshold1 AND

    d1 < threshold2 AND
    d2 < threshold2 AND
    d3 < threshold2), if so, then fade is detected

In step 66 the condition in respect of av detects a significant change in luminance from Y(n-5) to Y(n) and the other conditions in respect of d1, d2 and d3 detect a relatively smooth transition, for example, without spikes in luminance which might otherwise have a disproportionate effect on the average change av, from a luma level at the start of the fade to that at the end.

**Flash detection**

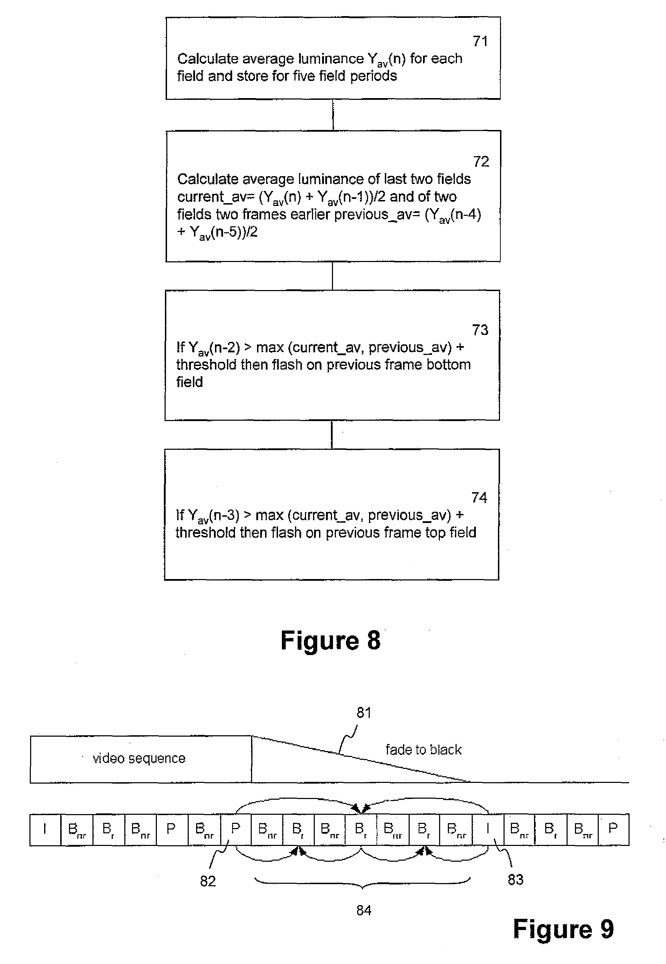

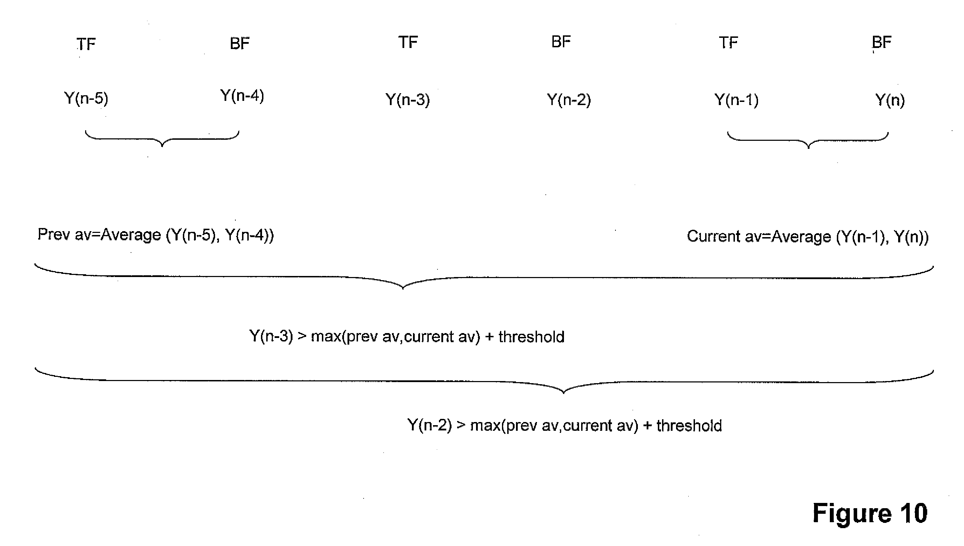

Camera flashes typically last for only one to two fields. A detection algorithm for flashes is much simpler than that for fades. Referring to Figures 8 and 10, an example algorithm is as follows:

1. Calculate, step 71, an average luminance value for each field, $Y_{av}(n)$ and store for five field periods;
2. At the end of each frame period, calculate, step 72, an average luminance value of the top and bottom fields of the current frame and those of a frame two frames earlier, although it will be understood that in a different embodiment the averages could be taken over more or fewer fields

$$current\_av = (Y_{av}(n)+Y_{av}(n\text{-}1))/2$$

$$previous\_av = (Y_{av}(n\text{-}4)+Y_{av}(n\text{-}5))/2;$$

3. If (Yav(n-2) > maximum(current_av,previous_av) +threshold), that is if the luminance of the preceding bottom field is significantly greater than the larger of the average field luminances of the preceding and succeeding frames, then a flash has been detected, step 73, on a bottom field of the previous frame; and
4. If (Yav(n-3) > maximum(current_av,previous_av) +threshold), that is if the luminance of the preceding top field is significantly greater than the larger of the average field luminances of the preceding and succeeding frames, then a flash has been detected, step 74, on the top field of the previous frame.

Comparing the two fields to the maximum luminance values of the previous and next frame prevents false detection on scene cuts.

**Compression improvement**

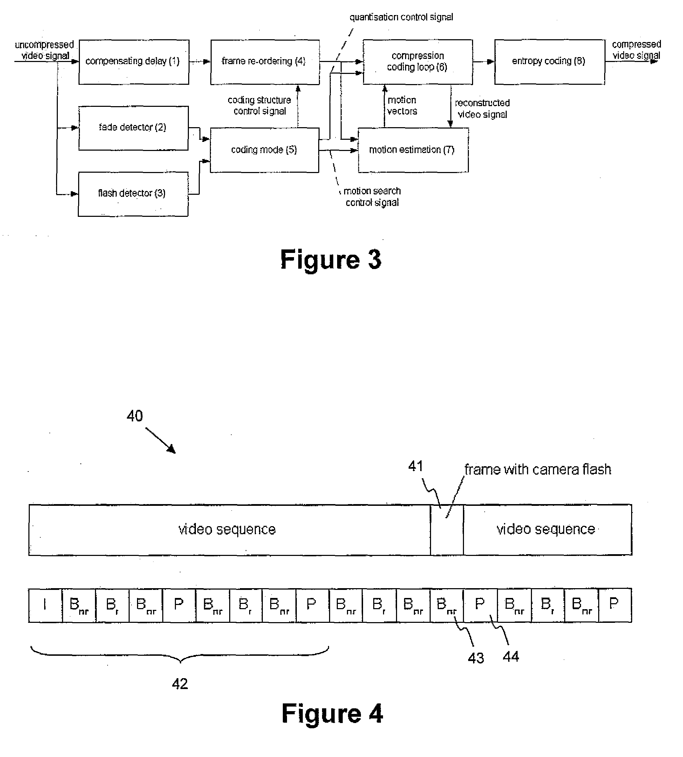

Figure 3 shows a block diagram of a system according to an aspect of the invention. An uncompressed video signal is input in parallel to a compensating delay 1, a fade detector 2 and a flash detector 3. An output of the compensating delay is input to a frame re-ordering block 4. Outputs of the fade detector 2 and the flash detector 3 are input to inputs of a coding mode block 5 which generates a coding structure control signal for input to a control input of the frame re-ordering block 4. A motion search control signal is also output from the coding mode block 5 to a motion estimator 7 and a quantisation control signal is output from the coding mode block 5 to a compression coding loop 6. Outputs from the frame re-ordering block 4 are also input to the motion estimator 7 and the compression coding loop 6. Motion vectors are output from the motion estimator 7 to the compression coding loop 6 and a reconstructed video signal is output from the compression coding loop 6 to the motion estimator 7. An output of the compression coding loop 6 is also output to an entropy coding block 8 to output a compressed video signal.
In use, the uncompressed video signal is input to the fade detector 2 and the flash detector 3 as well as to the compensating delay 1. The compensating delay 1 is necessary because the algorithms take several field periods before a fade or flash is detected. It is in the nature of the fade detector and flash detector algorithms that if one property is detected the other one will not be detected.

**Improvement on camera flashes**

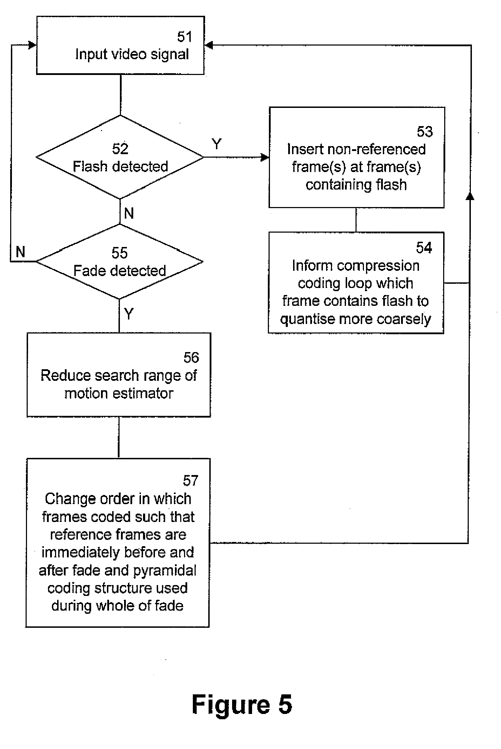

Referring to Figures 3 and 5, the coding mode block 5 changes a manner in which a video signal is encoded. For example, if a flash is detected, step 52, in a certain field then the coding structure is changed such that the frame on which the flash is detected is coded as a $B_{nr}$ frame, i.e. a frame from which no other predictions are taken. This can be done by inserting, step 53, one or

more additional $B_{nr}$ frames between I and P frames. Figure 4 shows an example of a sequence 40 with a camera flash 41. Following a regular coding structure of I $B_{nr}$ $B_r$ $B_{nr}$ P $B_{nr}$ $B_r$ $B_{nr}$ P frames it can be seen that the frame with the flash would have been coded as a P frame 44. However, this would give rise to distortions due to poor predictions from the P frame with the flash. The problem is solved by inserting an additional $B_{nr}$ frame 43 into the coding structure. Furthermore, the compression coding loop 6 is informed, step 54, about the camera flash so that the frame with the flash can be quantised more coarsely without causing any noticeable picture degradation.

**Improvement on fades**

Referring to Figures 3, 5 and 8, if a fade 81 is detected, step 55, the coding mode block 5 reduces, step 56, a search range of the motion estimation block 7 in order to reduce a number of otherwise large chaotic motion vectors. Furthermore, the coding mode block 5 changes, step 57, an order in which frames are coded such that the coding structure consists of a sequence of pyramid B frames 84 across the entire fade as shown in Figure 8. It can be seen in Figure 8 that the coding structure is arranged such that there are reference frames 82, 83 immediately before and after the fade 81 respectively and a pyramidal coding structure 84 is used during the fade.

**Claims**

1. A method of compressing a video signal comprising:

   a. on detecting (52) a flash in the video signal, inserting (53) at least one non-referenced frame to coincide with a duration of the flash; and
   b. on detecting (55) a fade in the video signal, changing (57) an order in which frames are coded such that referenced frames are positioned immediately before and after the fade and a pyramidal structure of bidirectionally coded frames are used for the duration of the fade.

2. A method as claimed in claim 1, wherein quantisation is increased in a frame in which a flash is detected.

3. A method as claimed in claims 1 or 2, wherein on detection of a fade a search range of a motion estimator is reduced (56) for the duration of the fade.

4. A method as claimed in any of the preceding claims, wherein detecting a flash in the video signal comprises the steps of:

   a. calculating (71) a first average luminance of fields of at least one frame immediately preceding a frame of interest and a second average luminance of fields of at least one frame immediately succeeding the frame of interest;
   b. calculating whether the luminance of a top field of the frame of interest exceeds the greater of the first average luminance and the second average luminance by a first predetermined threshold and if so signalling that a flash occurred in the top field of the frame of interest; and
   c. calculating whether the luminance of a bottom field of the frame of interest exceeds the greater of the first average luminance and the second average luminance by the first predetermined threshold and if so signalling that a flash occurred in the bottom field of the frame of interest.

5. A method as claimed in any of the preceding claims, wherein detecting a flash in the video signal comprises the steps of

   a. calculating (71) a first average luminance of the fields of the current frame;
   b. calculating (72) a second average luminance of the fields of a frame preceding the current frame by two frames;
   c. calculating whether the luminance of a bottom field of the frame preceding the current frame exceeds a greater of the first average luminance and the second average luminance by a first predetermined threshold and if so signalling (73) that a flash occurred in the bottom field of the previous frame; and
   d. calculating whether the luminance of a top field of the frame preceding the current frame exceeds a greater of the first average luminance and the second average luminance by the first predetermined threshold and if so signalling (74) that a flash occurred in the top field of the previous frame.

6. A method as claimed in any of the previous claims wherein detecting a fade in the video signal comprises the steps of:

   a. calculating (61) an average luminance for each of a first plurality of successive fields;
   b. calculating (62) successive differences in the average luminance between each of the first plurality of successive fields;
   c. calculating (63) a sum of the successive differences;
   d. calculating (64) an average of a second plurality of the sum and such sums of differences of immediately preceding fields;
   e. calculating (65) an absolute difference between the sums and their average; and
   f. signalling (66) that a fade is detected if the average is greater than a second predetermined threshold and if each of the absolute differences is less than a third predetermined threshold.

7.  A method as claimed in any of the previous claims wherein detecting a fade in the video signal comprises the steps of:

    a. calculating (61) an average luminance for each of four successive fields;
    b. calculating (62) successive differences in the average luminance between each of the four fields;
    c. calculating (63) a sum of the successive differences;
    d. calculating (64) an average of the sum and two such sums for successive differences of immediately preceding sets of fields;
    e. calculating (65) an absolute difference between the three sums and their average; and
    f. signalling (66) that a fade is detected if the average is greater than a second predetermined threshold and if each of the absolute differences is less than a third predetermined threshold.

8.  An encoder for a video signal comprising:p

    a. compensating delay means (1), fade detector means (2) and flash detector means (3) arranged such that a video signal may be input in parallel to the compensating delay means, the fade detector means and the flash detector means;
    b. frame re-ordering means (4) having an input connected to an output of the compensating delay means;
    c. coding mode means (5) having inputs from the fade detector means and the flash detector means to output a control signal to the frame re-ordering means;
    d. compression coding loop means (6) having inputs from the frame re-ordering means and the coding mode means;
    e. motion estimator means (7) having inputs from the frame re-ordering means and the coding mode means to output a motion vector to the compression coding loop means and to input a reconstructed video signal from the compression coding loop means; and
    f. entropy coding means (8) to receive an input from the compression coding loop and to output a compressed video signal;

    wherein the frame re-ordering means is arranged such that:

    g. on detection (52) of a flash in the video signal by the flash detector means (3), at least one non-referenced frame is inserted (53) to coincide with a duration of the flash; and
    h. on detection (55) of a fade in the video signal by the fade detector means (2), an order in which frames are coded is changed such that referenced frames are positioned immediately before and after the fade and a pyramidal structure of bidirectionally coded frames are used for the duration of the fade.

9.  An encoder as claimed in claim 8, wherein the fade detector means (2) is arranged to:

    a. calculate (61) an average luminance for each of a first plurality of successive fields;
    b. calculate (62) successive differences in the average luminance between each of the first plurality of fields;
    c. calculate (63) a sum of the successive differences;
    d. calculate (64) an average of a second plurality of the sum and such sums of differences of immediately preceding fields;
    e. calculate (65) an absolute difference between the sums and their average; and
    f. signal (66) that a fade is detected if the average is greater than a second predetermined threshold and if each of the absolute differences is less than a third predetermined threshold.

10. An encoder as claimed in claims 8 or 9, wherein the fade detector means (2) is arranged to:

    a. calculate (61) an average luminance for each of four successive fields;
    b. calculate (62) successive differences in the average luminance between each of the four fields;
    c. calculate (63) a sum of the successive differences;
    d. calculate (64) an average of the last three sums;
    e. calculate (65) an absolute difference between the three sums and their average; and
    f. signal (66) that a fade is detected if the average is greater than a second predetermined threshold and if each of the absolute differences is less than a third predetermined threshold.

11. An encoder as claimed in any of claims 8 to 10, wherein the flash detector means (3) is arranged to:

    a. calculate (71) a first average luminance of fields of at least one frame immediately preceding a frame of interest and a second average luminance of fields of at least one frame immediately succeeding the frame of interest;
    b. calculate whether a luminance of a top field of the frame of interest exceeds the greater of the first average luminance and the second average luminance by a first predetermined threshold and if so to signal that a flash (73) occurred in the top field of the frame of interest; and
c. calculate whether a luminance of a bottom field of the frame of interest exceeds the greater of the first average luminance and the second average luminance by the first predetermined threshold and if so to signal that a flash (74) occurred in the bottom field of the frame of interest.

**12.** An encoder as claimed in any of claims 8 to 11, wherein the flash detector means (3) is arranged to:

    a. calculate (71) an average luminance of each field for five field periods;
    b. calculate (72) a first average luminance of fields of a frame immediately preceding a frame of interest and a second average luminance of fields of a frame immediately succeeding the frame of interest;
    c. calculate whether the luminance of a top field of the frame of interest exceeds the greater of the first average luminance and the second average luminance by a first predetermined threshold and if so to signal (73) that a flash occurred in the top field of the frame of interest; and
    d. calculate whether the luminance of a bottom field of the frame of interest exceeds the greater of the first average luminance and the second average luminance by the first predetermined threshold and if so to signal (74) that a flash occurred in the bottom field of the frame of interest.

**13.** An encoder as claimed in any of claims 8 to 12, wherein the compression coding loop (6) is arranged to increase quantisation in a frame in which a flash is detected.

**14.** An encoder as claimed in any of claims 8 to 13, wherein the motion estimation means (7) is arranged to reduce (56) a search range on detection of a fade.

**15.** A computer program product comprising program code means arranged to perform all the steps of the method as claimed in any of claims 1 to 7 when that program code means is run on a computer.

**16.** A computer-readable medium embodying a computer program product as claimed in claim 15.

115

Arrows indicate predictions

113                                                        153

112          132                            134          154

| 11 | 12 | 13 | 14 | 15 |
|---|---|---|---|---|
| I picture | non-ref B picture | ref B picture | non-ref B picture | P picture |

# Figure 1

| P | B_nr | B_r | B_nr | B_r | B_nr | B_r | B_nr | P |
|---|---|---|---|---|---|---|---|---|

# Figure 2

quantisation control signal

uncompressed video signal → compensating delay (1) ┄→ frame re-ordering (4) → compression coding loop (6) → entropy coding (8) → compressed video signal

fade detector (2)

coding structure control signal

coding mode (5)

flash detector (3)

motion vectors

reconstructed video signal

motion estimation (7)

motion search control signal

## Figure 3

40

41    frame with camera flash

| video sequence | | video sequence |

| I | $B_{nr}$ | $B_r$ | $B_{nr}$ | P | $B_{nr}$ | $B_r$ | $B_{nr}$ | P | $B_{nr}$ | $B_r$ | $B_{nr}$ | $B_{nr}$ | P | $B_{nr}$ | $B_r$ | $B_{nr}$ | P |

42

43    44

## Figure 4

```
┌─────────────────────────────┐
│                          51 │
│      Input video signal     │
└─────────────────────────────┘

              ╱╲
            ╱    ╲
          ╱   52   ╲      Y      ┌──────────────────────────┐
         ╲ Flash detected ╲ ───────→│                      53  │
          ╲            ╱           │  Insert non-referenced   │
            ╲        ╱             │  frame(s) at frame(s)    │
              ╲    ╱               │   containing flash       │
                N                 └──────────────────────────┘

              ╱╲                  ┌──────────────────────────┐
            ╱    ╲                │                      54  │
     N    ╱   55   ╲              │  Inform compression      │
   ←──── ╲ Fade detected ╲        │   coding loop which      │
          ╲            ╱          │ frame contains flash to  │
            ╲        ╱            │  quantise more coarsely  │
              ╲    ╱              └──────────────────────────┘
                Y

┌─────────────────────────────┐
│                          56 │
│   Reduce search range of    │
│      motion estimator       │
└─────────────────────────────┘

┌─────────────────────────────┐
│                          57 │
│   Change order in which     │
│   frames coded such that    │
│    reference frames are     │
│  immediately before and     │
│   after fade and pyramidal  │
│   coding structure used     │
│      during whole of fade   │
└─────────────────────────────┘
```

# Figure 5

Calculate average luminance $Y_{av}(n)$ for each field and store for four fields

61

Calculate difference in luminance $Y_{av}(n)$ - $Y_{av}(n-1)$ between last four fields

62

Calculate sum(n) of the three field differences and store for three field periods

63

Calculate average av of last three sums sum(n), sum(n-1), sum (n-2)

64

Calculate absolute difference $d_n=|av-sum(n)|$ between the three sums and their average

65

Determine that fade detected if av > threshold1 and $d_n$< threshold2

66

# Figure 6

EP 1 968 325 A2

Y(n-5)      Y(n-4)      Y(n-3)      Y(n-2)      Y(n-1)      Y(n)

diff5=Y(n-4)–Y(n-5)    diff4=Y(n-3)–Y(n-4)    diff3=Y(n-2)–Y(n-3)    diff2=Y(n-1)–Y(n-2)    diff1=Y(n)–Y(n-1)

sum(n)=diff1+diff2+diff3

sum(n-1)=diff2+diff3+diff4

sum(n-2)=diff3+diff4+diff5

av=Average (sum(n),sum(n-1),sum(n-2)) > T1

d3=|av-sum(n-2)| < T2

d2=|av-sum(n-1)| < T2

d1=|av-sum(n)| < T2

**Figure 7**

```
┌─────────────────────────────────────────────┐
│                                         71   │
│ Calculate average luminance Yav(n) for each  │
│ field and store for five field periods       │
└─────────────────────────────────────────────┘
                       │
┌─────────────────────────────────────────────┐
│                                         72   │
│ Calculate average luminance of last two fields│
│ current_av= (Yav(n) + Yav(n-1))/2 and of two │
│ fields two frames earlier previous_av= (Yav(n-4)│
│ + Yav(n-5))/2                                 │
└─────────────────────────────────────────────┘
                       │
┌─────────────────────────────────────────────┐
│                                         73   │
│ If Yav(n-2) > max (current_av, previous_av) + │
│ threshold then flash on previous frame bottom │
│ field                                         │
└─────────────────────────────────────────────┘
                       │
┌─────────────────────────────────────────────┐
│                                         74   │
│ If Yav(n-3) > max (current_av, previous_av) + │
│ threshold then flash on previous frame top field│
└─────────────────────────────────────────────┘
```

# Figure 8

Figure 9

EP 1 968 325 A2

| TF | BF | TF | BF | TF | BF |
|---|---|---|---|---|---|
| Y(n-5) | Y(n-4) | Y(n-3) | Y(n-2) | Y(n-1) | Y(n) |

Prev av=Average (Y(n-5), Y(n-4))

Current av=Average (Y(n-1), Y(n))

Y(n-3) > max(prev av,current av) + threshold

Y(n-2) > max(prev av,current av) + threshold

**Figure 10**